# EUROPEAN PATENT SPECIFICATION

(11) **EP 2 584 807 B1**
(45) Date of publication and mention of the grant of the patent: **11.10.2017**
(21) Application number: 11008376.3
(22) Date of filing: 18.10.2011
(51) Int. Cl.: H04W 12/06, G06Q 20/20, G06Q 20/32, H04L 29/06

(54) **Enabling payment for items using a mobile device**
Ermöglichung der Bezahlung für Artikel mittels mobiler Vorrichtung
Autorisation du paiement d'articles au moyen d'un dispositif mobile

(43) Date of publication of application: 24.04.2013
(73) Proprietor: Accenture Global Services Limited, Dublin 4 (IE)
(72) Inventor: Bruder, Felix, 73732 Esslingen (DE)
(74) Representative: Müller-Boré & Partner Patentanwälte PartG mbB

(56) References cited:
- WO-A1-2010/078616
- CA-A1- 2 313 940
- US-A1- 2003 065 805

## Description

### Technical Field

The following description relates to enabling payment for items using a mobile device.

### Background

It is desirable to facilitate the use of mobile devices, such as mobile phones or other handheld devices, for making payments at a point of sale. A shop, a store or other facility may include multiple points of sale. Several challenges are to make payments quick and convenient, to keep queues short, to eliminate the need for investing in hardware at the point of sale, to enable customers to use an existing handheld device without needing to purchase a new device or needing to purchase hardware for an existing device.

CA 2,313,940 (Alcatel, 2001) discloses a method for the delivery of a commodity using a mobile-radio terminal. The method comprises establishment of a first communications link between a device for the delivery of the commodity and the mobile-radio terminal via a spatially narrowly limited transmission path. The method further comprises establishment of a second communications link between the mobile-radio terminal and a services computer of a mobile-radio telecommunications network via a mobile radio transmission path.

### Technical definitions

An *item* may be something purchased, and may also be referred to as a product, a good or a consumer good. Examples of items are a box of cereal, a (used) book or a virtual good.

An *item identifier* or *item collection identifier* or *item set identifier* can be used to enable a user to distinguish a particular set (or collection) of items from other sets of items. Examples of item identifiers may include a price of the set of items, a picture of the user who desires to purchase the items, a picture of a person who scanned the items, a picture of a person who bagged the items, a picture of a container containing the items, or a unique identifier (e.g. a receipt or bill identifier) associated with the items.

A *signal,* such as an *identification signal* or an *activation signal,* can be sent or transmitted using electromagnetic waves, as used in Bluetooth, wireless fidelity (WiFi), or radio. Other technologies for sending and receiving information, such as lasers, cameras, barcodes, etc., can also be used for signal propagation.

An *identifier list* may be implemented as collection of one or more item identifiers.

A *point of sale* or point of purchase, such as a checkout or checkstand, may be understood as a location where a transaction occurs. The point of sale may be a terminal and may include one or more of the following: general computer hardware and software, hardware and software that is specific for a point of sale, and hardware and software that is specific for a particular store.

A *device manager* may be implemented as a computer (where the term computer includes computer networking devices) including an access point (also referred to as a wireless access point or a base station), the access point being operable to connect wireless devices to an existing network, e.g. a local area network (LAN). The access point may be implemented as a wireless switch. The access point may include dynamic host configuration protocol (DHCP) capability. The device manager may include interfaces for other technologies, such as a barcode reader or an RFID reader. The device manager may also include a capability of communicating with an external service provider and a capability of identifying a mobile device, e.g. based on a telephone number.

Although the present application refers to a single device manager, multiple device managers may be implemented, e.g. one device manager for each point of sale or there may be device managers distributed at predetermined locations in a store.

A *store* may be understood to refer to any location where goods are sold, such as a supermarket, a shopping mall or an outdoor market.

A *service provider* may be understood as an organization that has access to a user's financial account and is able to verify that sufficient funds are available on the account. The service provider may be a financial services provider, a payment provider, or more particularly, a bank. As service provider may be capable of authenticating the mobile device, or more particularly, a user of the mobile device. The service provider may also facilitate execution of payment after authentication, and preferably after authorization, of the mobile device.

A *mobile network* may be implemented as a group of interconnected computers and/or mobile devices, at least one of which communicates wirelessly.

A *mobile device* may refer to a device in the mobile network capable of wireless communication. Examples of mobile devices are smart phones, mobile phones, personal digital systems, pagers, and other electronic devices that can connect to a mobile network, and can be used to transmit and receive data. A mobile device may communicate wirelessly using local area technologies such as wireless fidelity (WiFi), or wide area wireless technologies such as general package radio service (GPRS), universal mobile telecommunications system (UMTS), high speed packet access, or world wide interoperability for microwave access (WIMAX). Enhanced data rates for global evolution (EDGE) can also be used. Other suitable communication technologies available today or in the future are also possible.

Mobile devices may also communicate using Short message service (SMS) messages or Bluetooth. Bluetooth capable devices may operate in a point-to-point or broadcast mode. SMS messages may be sent point-to-point or broadcast to all mobile devices in a specified geographical area.

Features disclosed in the present application may lead to a number of advantages. In particular, if the disclosed subject matter is implemented using technologies such as SMS and/or WiFi, costs are low since the technology required is already implemented at the point of sale and in most mobile devices. Thus, no new hardware needs to be purchased for either the point of sale or the mobile device. Moreover, implementing mobile payment using technologies available in most mobile devices obviates the need to upgrade mobile devices or wait for the introduction of mobile devices with appropriate capabilities into the market place.

Also, items can be paid for more quickly since the mobile device is authenticated and confirmation of the authentication is received by a device manager before an identifier of selected items is received. In other words, the point of sale (or the device manager) knows that the user of the mobile device is able to pay for a set of items before the user begins preparing to pay for the items.

Furthermore, sending the identifier list to a group address may enable greater throughput to be achieved. In particular, more mobile devices may be reached more quickly when sending to a group address than when making individual point-to-point connections from the point of sale to each mobile device in range.

The subject matter described in this specification can be implemented as a method or on a mobile device coupled to a device manager, possibly in the form of one or more computer program products. The subject matter described in this specification can be implemented in a data signal or on a machine readable medium, where the medium is embodied in one or more information carriers, such as a CD-ROM, a DVD-ROM, a semiconductor memory, or a hard disc. Such computer program products may cause a data processing apparatus to perform one or more operations described in the specification.

In addition, the subject matter described in the specification can be implemented as a system including a processor, and a memory coupled to the processor. The memory may include one or more programs to cause the processor to perform one or more of the methods described in the specification. Further subject matter described in the specification can be implemented using various machines.

Details of one or more implementations are set forth in the exemplary drawings and description below. Other features will be apparent from the description, the drawings, and from the claims. The invention is defined by the independent claims. Further embodiments of the invention are defined by the dependent claims.

### Brief Description of the Figures

Fig. 1 shows a diagram of a computer system suitable for enabling payment for items using a mobile device.
Figs. 2 to 4 depict a modified swim lane diagram, showing steps according to the present application.

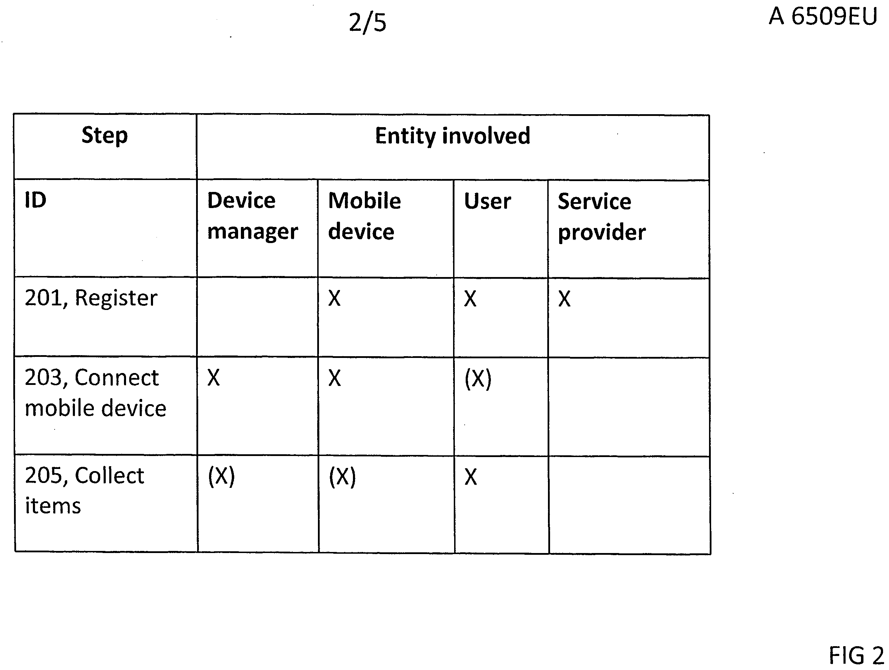

Fig. 2 shows steps 201 to 205 of a method for enabling payment for items using a mobile device.

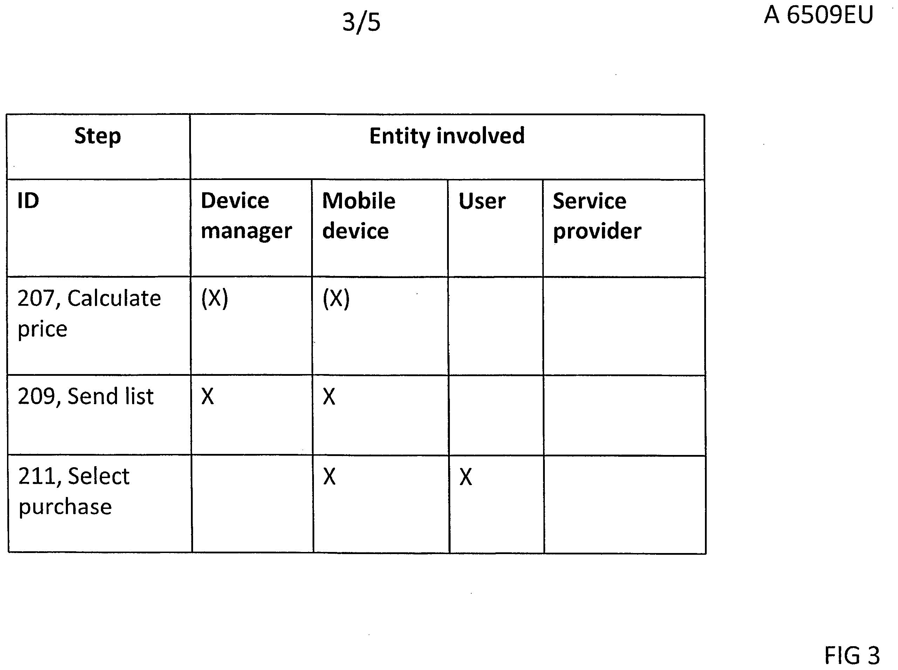

Fig. 3 shows steps 207 to 211 of the method for enabling payment for items using the mobile device.

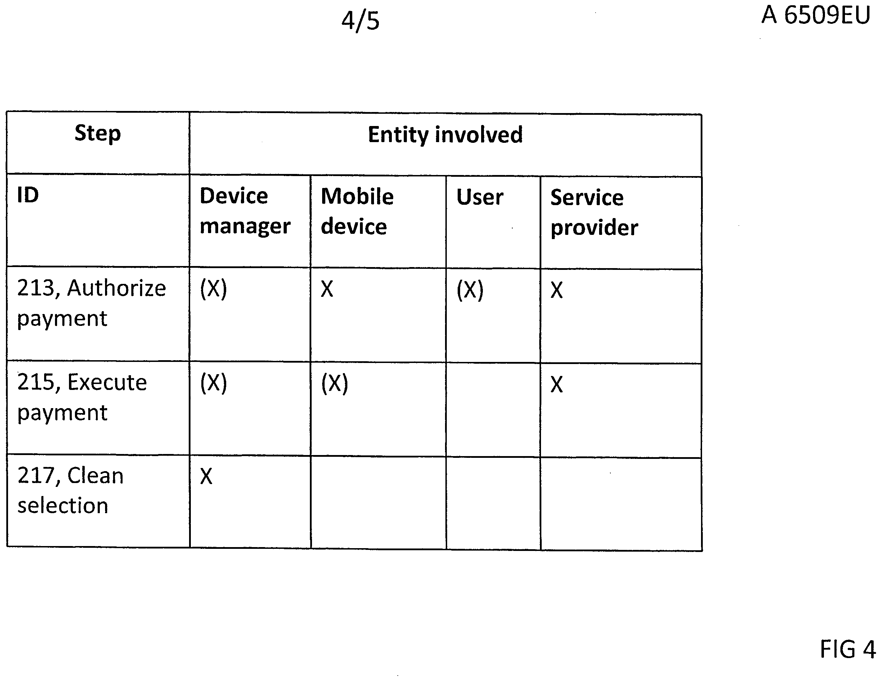

Fig. 4 shows steps 213 to 217 of the method for enabling payment for items using the mobile device.

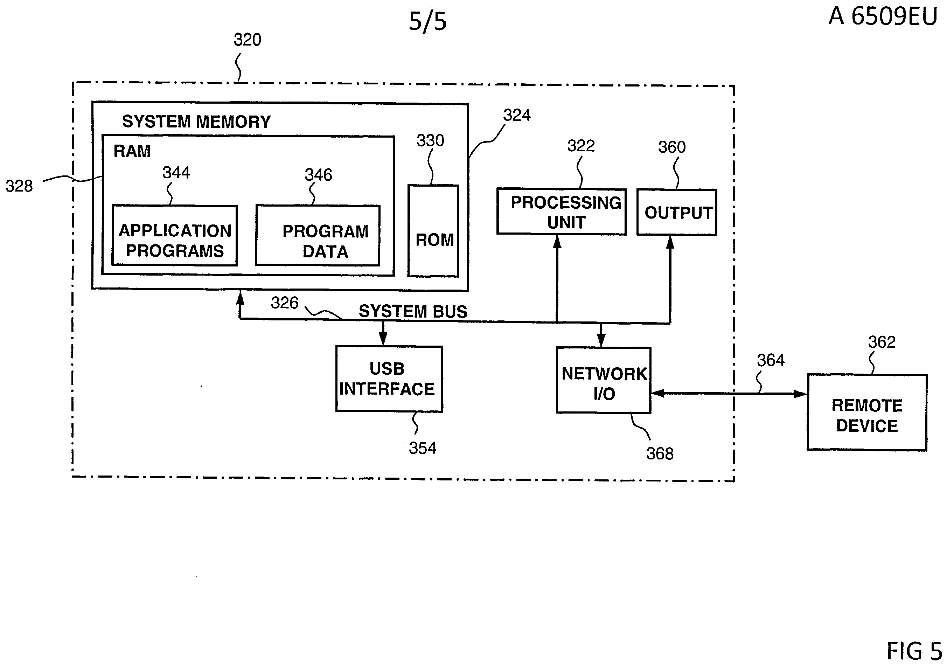

Fig. 5 shows a computer system including a mobile computing environment coupled to a remote device.

### Detailed Description

In the following text, a detailed description of examples will be given with references to the drawings. It should be understood that various modifications to the examples may be made. In particular, one or more elements of one example may be combined and used in other examples to form new examples.

In some cases, identification of a mobile device and matching the mobile device with a payment amount can be achieved with near field communication (NFC).

Accordingly, a payment may be made with an NFC device by touching a payment terminal with the device when a personal identification number (PIN) is entered. Disadvantages are that the NFC enabled device must normally be very close, i.e. within 4 cm, to the payment terminal, and NFC must be enabled on both the payment terminal and the mobile device. Other options may include typing or entering a payment amount or data about the user, such as an account number, at the point of sale. Further options may include touching the mobile device at the point of sale, also requiring new hardware at the point of sale. Another option may include reading a barcode, such as a matrix bar code or, more particularly, a quick response barcode, from the display of the mobile device (typically requiring further hardware, such as a scanner, to be installed at the point of sale). These options may have the disadvantage that additional hardware must be installed at the point of sale and/or on the mobile device.

A method for paying for items using a mobile device, possibly using NFC, may involve the following steps:
First, a user will collect a set of items.
Second, the user will wait in line until all the items in the set of items are identified. In particular, the items may be identified using a scanner such as a barcode reader or an RFID reader. The barcode reader may be implemented using Bluetooth. The barcode may be a Quick Response (QR) code. Manual entry may also be used.
Third, once the individual items are scanned, a payment request is transmitted to the mobile device.
Fourth, the mobile device is authenticated, e.g. by means of a personal identification number (PIN) or something similar. The payment may also be authorized, e.g. availability of funds may be verified. The authentication may be carried out via a wireless network, using e.g. IEEE 802.11. Two channel authentication may also be used, e.g. an access code is sent via an SMS and the access code must be entered into a web browser to authenticate a transaction.
Fifth, the user of the mobile device waits for confirmation of authentication and authorization from a service provider. The conformation may be sent via the wireless network. As an optional sixth step, the user also waits for an SMS confirmation from the service provider. Sending confirmations using multiple channels may provide additional security.

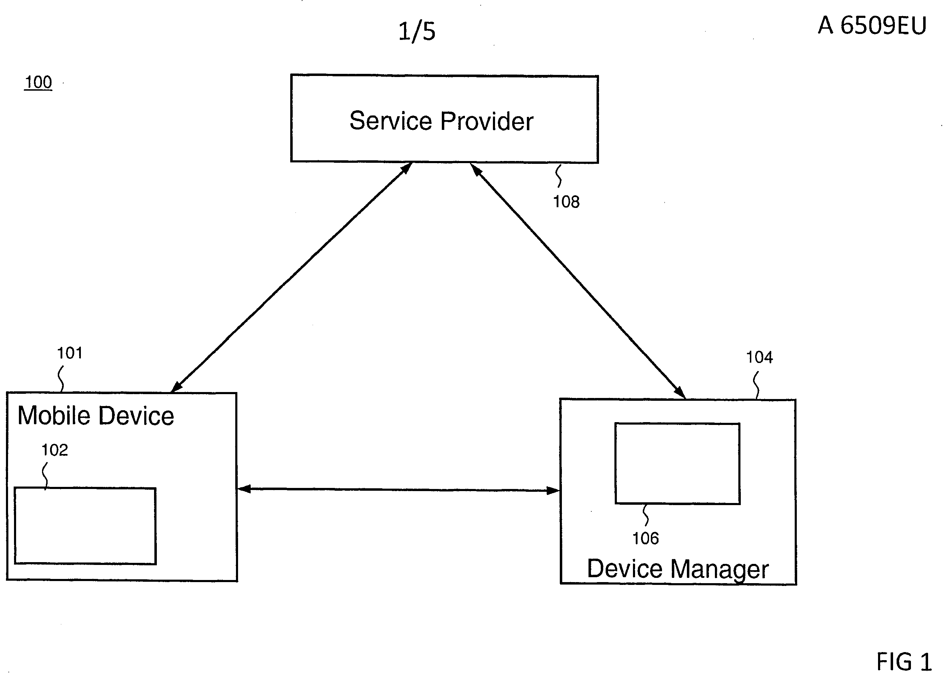

Figs. 2 to 4 depict a modified swim lane diagram, showing method steps according to the present application. Each step is identified by a reference sign and a title. For example, the first step of Fig. 2 is identified by reference sign 201 and the title "Register". At least one of four entities is involved in carrying out each step. The entities are a device manager, a mobile device, a user, and a service provider. An "x" in a box corresponding to an entity and a step indicates that the entity is involved in carrying out the step. An "(x)" in a box corresponding to an entity and a step means that the entity is optionally involved in carrying out the step. For example, in step 203 of Fig. 1, the device manager entity and the mobile device entity are both involved in step 203, connect mobile device. The user entity is optionally involved in step 203, connect mobile device.

**Fig. 1** shows a diagram of a computer system 100 suitable for enabling payment for items using a mobile device 101. Other systems may be used. Also, components may be added, substituted for other components or removed. The mobile device 101 may be connected (e.g. via wireless communication) to a device manager 104. The device manager 104 may include an access point 106 to facilitate wireless communication with the mobile device and/or other wireless computing devices.

The mobile device 101 may be connected to a service provider 108, e.g. for authentication. the device manager 104 may also be connected to the service provider 108, e.g. to confirm (or verify) authentication of the mobile device 101. The mobile device 101 may include a location identifier 102.

**Fig. 2** shows steps 201 to 205 of a method for enabling payment for items using a mobile device 101. At step 201, the mobile device 101 is registered. Registering the mobile device 101 may involve the user initializing and/or setting up an application (e.g. a payment application) on the mobile device 101 that enables payment for items. In addition, registering the mobile device 101 may include exchanging information with the service provider, e.g. account numbers, authentication means, a maximum purchase amount, etc. Registering may also include distributing hardware to the user, such as tokens, a subscriber identity module (SIM), cards, etc. Also, registering may include distributing software to the user, e.g. code enabling access to a remote device, and/or an application (e.g. a payment application) operable to execute on the mobile device 101 and to carry out the steps described in the present application. The payment application may be associated with the account number, and the account number may be a bank or credit card account number. During registration, a key, a signature, and/or a certificate may also be provided to the user or loaded on the mobile device 101. In particular, information required to authenticate the mobile device 101 with the service provider may be loaded on the mobile device 101 and/or provided to the user. Registration of the mobile device 101 may be independent of the mobile device 101 itself, e.g. registration may be carried out by using the user's knowledge to establish communication.

Registering the mobile device 101 may also include authenticating the mobile device 101 with a service provider. Confirming authentication of the mobile device 101 may be performed immediately after authentication of the mobile device 101 with the service provider or at any time before step 209, as shown in Fig. 3.

Authentication and/or confirmation of authentication of the mobile device 101 may be performed only once. Alternatively, authentication and/or confirmation thereof may be performed periodically, e.g. once a month or bi-monthly, or according to another suitable period. Authentication and/or confirmation thereof could also be performed every time a user enters a store or for certain stores according to a policy (e.g. some stores may require authentication for every visit or for purchases above a certain amount in order to ensure that a payment will be made).

At step 203, the mobile device 101 is connected (or coupled) to the device manager. In some cases, there may be a plurality of device managers, such that each point of sale implements a device manager. Alternatively, a central device manager may be used. Further configurations, e.g. multiple device managers located throughout the store, are also possible.

Confirmation of authentication of the mobile device 101 may include receiving pre-authorization (or authorization) at the device manager. Pre-authorization may be received from the service provider and may include information such as an indication that there are funds in the account of the user and/or that the payment request will be executed. The confirmation of the authentication of the mobile device 101 may also comprise an indication that the PIN provided by the user is correct. In addition, the results of any cryptographic authentication may also be provided with the confirmation.

The mobile device 101 may be activated by means of an activation signal. This may be carried out in a number of ways. For example, the mobile device 101 may include the location identifier 102, which may be implemented as a global navigation satellite system (GNSS) receiver (e.g. a global positioning system (GPS) receiver) or another means of location identification. The GPS receiver may be used to determine when the mobile device 101 is in a particular location. Thus, the activation signal may be received by the payment application or generated by the payment application when the mobile device 101 is moved or transported to the particular location. Examples of such locations include retail stores or facilities. Alternatively, the activation signal may be received by the mobile device 101 from the device manager. It is also possible that the activation signal is triggered manually by the user, e.g. when entering the store or approaching an exit from the store.

For example, the activation signal may be automatically triggered when the mobile device 101 approaches an entrance of the store or a point of sale near the exit from the store. Triggering the activation signal near the entrance may have the advantage that the mobile device 101 can be used to scan items or perform other tasks related to a purchase without requiring user intervention. Triggering the activation signal near the exit may have the advantage that power of the mobile device 101 is conserved such that the mobile device 101 is not activated until the mobile device 101 can be used, e.g. to make a purchase.

According to a specific example, the device manager includes an access point that periodically sends a wireless signal that can be received by devices within a certain range which have WiFi capability. More particularly, the signal may be sent every 10 seconds, or preferably every 8 seconds or more preferably every 5 seconds. The range may be up to 275 m² from the device manager. The activation signal may have a certain signature, i.e. certain characteristics such as an identifier of the payment application on the mobile device 101. The payment application may be configured to listen for signals with the signature (e.g. by listening on a particular Transport Control Protocol or User Datagram Protocol port number). Once the activation signal is received, encryption between the mobile device 101 and the device manager can be negotiated so that further communications are secure. In particular, an exchange of keys between the mobile device 101 and the device manager may be performed. In addition, or alternatively, a simple secure pairing (SSP) as used by Bluetooth capable devices, may also be carried out.

An SMS message could also be used as an activation signal. The SMS message could be triggered by sensing the presence of the device in a particular location or by an action of the user (e.g. inserting a plastic card in a particular machine or identification of a vehicle of the user at a particular location). Alternative triggers are also possible.

The payment application on the mobile device 101 may be implemented as an online payment application (e.g. using HTML5), such that most of the required processing is performed on a remote computer and limited payment application code is included on the mobile device 101. Such a configuration may result in improved security, since the remote server may be easier to secure than multiple mobile devices.

Encryption of communications between the mobile device 101, the device manager, and/or the service provider may be desirable, particularly if sensitive information such as a PIN or other authentication information is transmitted from the mobile device 101 to the device manager or service provider. Use of encryption may make it possible to avoid a situation in which a third party captures the user's authentication information and reuses it for future purchases.

To provide further security, temporary credentials, optionally received from the service provider, may be used to secure communications between the mobile device 101 and other entities (e.g. the device manager or the service provider). For example, an authentication mechanism consisting of a token (e.g. a hardware token possibly consisting of a USB dongle or a software token) may be provided to the user. The token may generate an authentication code at fixed intervals (e.g. 30 to 60 seconds) using a built-in clock and a random key, also referred to as a seed. For example, the RSA SecurelD token may be used. The use of temporary credentials may provide the advantage that it is virtually impossible for a third party to use intercepted authentication information. Use of temporary credentials may obviate the need for encryption.

In addition, techniques used to secure radio communications, such as frequency hopping spread spectrum (FHSS), could also be used to protect communications between the mobile device 101 and other entities.

Activating the mobile device 101 may comprise activating the payment application on the mobile device 101. The mobile device 101 may respond to the activation signal by sending an identification signal to the device manager. The identification signal may be used to identify the mobile device 101. In particular, the identification signal may be used to identify the mobile device 101 and determine that the payment application can be used to pay for items. The identification signal may include a telephone number of the mobile device 101 and/or a unique identifier of the user.

At step 205, the user may select or collect a set of items. In some cases, the user may move through the store and physically collect the set of items. Alternatively, the user may virtually select items in the set of items using a separate computer or the mobile device 101. The virtually selected items may be waiting for the user at the store, or the items may be delivered to the user.

Turning to **Fig. 3****,** at step 207, a price for the items may be calculated. In particular, individual items in the set of items collected or selected by the user may be identified. Identifying the items may be carried out using the mobile device 101. Alternatively, identifying the items may be carried out using an item identification device, such as a scanner, or more particularly, a barcode reader. The item identification device may be part of the device manager or the item identification device may be a separate device. For example, when the identification device is implemented as a scanner, the scanner may be installed at the point of sale or the scanner may be implemented in the mobile device 101.

Individual items may be identified using a scanner or by manual entry (e.g. typing in a number associated with the corresponding individual items). Alternatively, the items may be identified by means of an RFID tag coupled to the item, by scanning using the mobile device 101, by weighing the items, or simply by counting (e.g. if all the items have the same price). Item identification may be facilitated by an International Standard Book Number (ISBN), identifiers on a web page, or a Quick Response (QR) code.

Steps 205 and 207 may be combined. For example, when a user virtually selects items, the virtually selected items may be identified and a price for the items may be calculated before the user arrives at the store.

Once the individual items are identified, the set of items may be fixed (i.e. the items that are members of the set are determined or resolved). Then, an item identifier identifying the set of items may be determined. Thus, the item identifier distinguishes the set of items from other sets of items. The other sets of items may have been selected in a manner similar to the manner of selection of the first set of items. The item identifier may be implemented as one or more of the following: a price of the items, a picture of the user, a picture of a person who scanned the items, a picture of a person who bagged the items, a picture of a bag containing the items, a unique identifier associated with the items. The use of other similar identifiers is also possible.

In some cases, multiple item identifiers may be determined at similar times at one or more points of sale. In such situations, it is possible that one or more item identifiers will be equal. To resolve this situation, item identifiers determined later can be adjusted so that they differ from item identifiers determined earlier. For example, if the item identifier is a cost of the set of items and if the costs of two sets of items are equal, one of the costs (e.g. the cost most recently received by the device manager) is adjusted, e.g. by one cent. Similar adjustments, e.g. two cents, five cents, or ten cents, are also possible. In addition, multiple item identifiers can be combined in order to produce a composite item identifier that is unique.

At step 209, the item identifier may be added to an identifier list. For example, the device manager may maintain a list of item identifiers corresponding to sets of items that have not yet been paid for. Once a new item identifier is determined, the new item identifier can be added to the identifier list.

The identifier list may be published via a push mechanism or distributed via a pull mechanism. According to the push mechanism, the device manager may send the identifier list to a plurality of mobile devices. The devices may then receive the identifier list. According to the pull mechanism, the mobile devices may contact a data source and receive the identifier list from the data source in response to a request. The data source may be a server such as a web server.

For example, according to the push mechanism, the item identifier list may be periodically published. Publishing the identifier list may be carried out by the device manager. Publishing the identifier list may involve sending the identifier list to a group address, such as a broadcast address or a multicast address. In particular, all mobile devices that have been identified may be assigned an IP address, e.g. by means of DHCP, and the identifier list may be published to all identified mobile devices. In other words, publishing to the group address may enable the identifier list to reach all identified mobile devices.

In case of an implementation including multiple device managers, a particular device manager may be selected to publish the identifier list. Alternatively, multiple device managers throughout the store may each send different identifier lists. In this case, each device manager may send the corresponding identifier list to a different group address; alternatively, mobile devices may be configured to listen to broadcasts from a particular device manager or each group of mobile devices may be configured to process packets destined for a particular multicast address. Each group address may include mobile devices associated with a particular point of sale, or mobile devices associated with multiple points of sale.

Alternatively, a device manager may simply broadcast the identifier list to all mobile devices within range. The identifier list may be displayed on the mobile device 101 by means of the payment application.

Receiving the identifier list after confirming authentication of the mobile device 101 leads to the technical effect that payment for items may be executed more quickly. This is because it is not necessary for the user to wait for authentication and confirmation of authentication when the user is ready to pay for the items. Furthermore, faster payment execution may be achieved because the user does not need to wait for payment authorization and confirmation of payment authorization when the user is ready to pay for the items.

The identifier list may also be transmitted using NFC. However, use of a transmission means other than NFC has the advantage that connection information between the device manager and the mobile device 101 has already been exchanged. Moreover, since NFC offers no protection against eavesdropping and can be vulnerable to data modifications, use of another technology for which encryption has already been established and for which authentication has already been confirmed may provide improved security.

At step 211, a user may select an item identifier from the identifier list, where the identifier list is displayed by the payment application on the mobile device 101. An indication of the selection is then sent from the mobile device 101 to the device manager. The indication may be a number corresponding to the item identifier, the item identifier itself, or something similar. When the identifier list is displayed, similar item identifiers could be highlighted, e.g. in different colors, in order to distinguish them and reduce user errors. Other means of distinguishing item identifiers could also be used. Furthermore, additional information can be provided with the item identifiers, such as the point of sale number, the name of the cashier, the cashier number, the name of the bagger, or the names of one or more items included in the purchase.

In the event that the user does not select the item identifier corresponding to his purchase (i.e. the user selects the wrong identifier), the user may communicate with an administrator, particularly an employee of the store, who reestablishes the item identifier selected by the user in the identifier list and enables the user to select the correct item identifier. Alternative error handling mechanisms are also possible.

Alternatively, step 211 may be implemented automatically, e.g. using biometric identification or facial recognition. For example, a photo of the user could be taken and the photo of the user could be compared with photos in a database. Other methods of automatic identification of the user could also be used.

Turning to Fig. 4, at step 213, the user may authorize payment for the set of items by means of the mobile device 101. Authorizing payment may comprise indicating acceptance via an OK button, entering a PIN or a password, or some other means of indicating agreement to pay. Alternatively, bringing the device to a certain location, waving the device in a certain way (e.g. a bump or hoccer mechanism), passing the device through a gate, or voice input may indicate authorization of payment. For example, when the mobile device 101 is moved to a predetermined location, an authorization signal may be sent from the payment application to the service provider. It is also possible that the authorization signal is sent from the device manager to the service provider when the mobile device 101 is moved to a particular location, passes through a gate, or some similar mechanism. Thus, the user could leave the store with selected items and payment for the selected items could be triggered automatically upon exit from the store.

At step 215, payment for the set of items is executed. Payment execution can take one of the following forms: direct debit transaction with the store, a credit transfer to the store, a payment made via a card, such as a debit card or a credit card, a payment made with vouchers or bonus points, electronic coins, etc.

A combination of two or more payment execution mechanisms listed above is also possible. Once payment has been executed, confirmation of the payment may be received by the device manager, e.g. from the service provider. Alternatively, a code may be received at the mobile device 101 from the service provider that can be used to confirm payment to the device manager.

Debit or credit card payments may take the following form. An instruction with at least one credential, e.g. a PIN, is sent to the point of sale, the point of sale sends the credential to the service provider (e.g. a bank or credit card company) and the service provider confirms the validity of the credential. Confirmation of credential validity triggers a transfer of funds and payment for the items is executed. The actual transfer of funds from the user to the store can take place immediately, or can be delayed.

In a credit transfer, an instruction including at least one credential is sent from the mobile device 101 to a service provider. The service provider either receives the user's account number with the instruction, or a code identifying the account; alternatively, the service provider receives a separate message from the user that can be matched to the account. Once the credential has been validated, the service provider allows the transaction to proceed.

Virtual coins can also be used to execute payment. A value is stored on or provided by the device, and sent directly to the point of sale. For example, a PIN issued by Paysafecard or a virtual voucher may be used.

At step 217, an item identifier corresponding to a payment that has been executed may be deleted from the identifier list. Deletion of the item identifier occurs after receiving confirmation of payment. Deletion of the item identifier may ensure that only relevant item identifiers are included on the identifier list and displayed for selection.

**Fig. 5** shows an exemplary system for implementing the claimed subject matter including a general purpose computing device in the form of a conventional mobile computing environment 320 (e.g. a mobile computer). The conventional mobile computing environment may include a processing unit 322, a system memory 324, and a system bus 326. The system bus couples various system components including the system memory 324 to the processing unit 322. The processing unit 322 may perform arithmetic, logic and/or control operations by accessing the system memory 324. The system memory 324 may store information and/or instructions for use in combination with the processing unit 322. The system memory 324 may include volatile and non-volatile memory, such as a random access memory (RAM) 328 and a read only memory (ROM) 330. A basic input/output system (BIOS) containing the basic routines that helps to transfer information between elements within the mobile computer 320, such as during start-up, may be stored in the ROM 330. The system bus 326 may be any of several types of bus structures including a memory bus or memory controller, a peripheral bus, and a local bus using any of a variety of bus architectures. The system memory 324 may provide storage of computer readable instructions, data structures, program modules and other data for the mobile computer 320. The data structures may include relevant data for the implementation of the method for enabling payment for items using the mobile computer 320. The relevant data may be organized in a database, for example a relational or object database.

The mobile computer 320 may further include a hard disk drive for reading from and writing to a hard disk, and an external disk drive for reading from or writing to a removable disk (not shown). The removable disk may be a magnetic disk for a magnetic disk driver or an optical disk such as a CD ROM for an optical disk drive.

It should be appreciated by those skilled in the art that various types of computer readable media which can store data that is accessible by a computer, such as magnetic cassettes, flash memory cards, digital video disks, random access memories, read only memories, and the like, may be used in the exemplary operating environment.

A number of program modules may be stored in the system memory 324 including an operating system (not shown), one or more application programs 344, other program modules (not shown), and program data 346. The application programs may include at least a part of the functionality as depicted in Figs. 1 to 5.

A user may enter commands and information, as discussed below, into the mobile computer 320 through input devices such as keyboard or mouse. Other input devices (not shown) may include a microphone (or other sensors), joystick, game pad, scanner, or the like. These and other input devices may be connected to the processing unit 322 through a USB interface 354 that is coupled to the system bus 326, or may be collected by other interfaces, such as a parallel port interface, game port or a serial interface. Further, information may be printed using a printer. A monitor or other type of display device is also connected to the system bus 326 via an interface, such as an output 360. In addition to the monitor, computing environment 320 may include other peripheral output devices (not shown), such as speakers or other audible output.

The computing environment 320 may communicate with other electronic devices such as a computer, telephone (wired or wireless), personal digital assistant, television, or the like. To communicate, the computer environment 320 may operate in a networked environment using connections to one or more electronic devices. **Fig. 5** depicts the computer environment networked with remote computer 362. The remote computer 362 may be another computing environment such as another mobile computer, a server, a router, a network PC, a peer device or other common network node, and may include many or all of the elements described above relative to the computing environment 320. The device manager described above may be implemented as the remote computer 362. The logical connections depicted in Fig. 5 include a local area network (LAN) 364. In addition, the mobile computer 320 may be connected to a wide area network (WAN) 366. Such networking environments are commonplace in offices, enterprise-wide computer networks, intranets and the Internet and may be encrypted.

When used in a LAN networking environment, the computing environment 320 may be connected to the LAN 364 through a network I/O 368. Furthermore, other data relevant to enabling payment for items using a mobile device (described above) may be resident on or accessible via the remote computer 362. It will be appreciated that the network connections shown are exemplary and other means of establishing a communications link between the electronic devices may be used.

The above-described computing system is only one example of the type of computing system that may be used to implement the enablement of payment for items using a mobile device.

According to an aspect, a computer-implemented method for enabling payment for items using a mobile device 101 is provided. The method may comprise authenticating the mobile device 101 with a service provider 108. The method may further comprise confirming, by a device manager 104, authentication of the mobile device 101. In addition, the method may comprise activating the authenticated mobile device 101 by means of an activation signal. Moreover, the method may comprise responding to the activation signal by sending an identification signal from the authenticated mobile device 101 to the device manager 104. Furthermore, the method may comprise identifying, by the device manager 104, the authenticated mobile device 101 using the identification signal. The method may further comprise receiving, by the identified mobile device 101, an identifier list, the identifier list including a first item identifier identifying a first set of items, wherein the identifier list is received after the confirmation of the authentication of the mobile device 101 by the device manager 104. The method may also comprise sending, by the identified mobile device 101 to the device manager 104, an indication of a selection of the first item identifier.

Responding to the activation signal may further comprise sending a discovery signal from the mobile device 101 to the device manager 104, and receiving, from the device manager 104, an Internet Protocol (IP) address at the mobile device 101.

The identification signal may comprise a telephone number associated with the authenticated mobile device 101, and optionally, a personal identification number of the first user.

Faster payment may be achieved by authenticating and confirming authentication according to the method above, since the mobile device 101 is authenticated before an item identifier is selected for payment. In particular, the order of steps may reduce the amount of time that the user has to wait in order to pay for items.

Authenticating the mobile device 101 with the service provider 108 may be understood as authenticating a user of the mobile device 101, e.g. the first user. In particular, authentication may be defined as verifying the identity of the user of the mobile device 101.

Confirming the authentication of the mobile device 101 may comprise receiving, by the device manager 104, a notification signal from the service provider 108, or receiving, by the mobile device 101 from the service provider 108, a credential. The credential may be provided to the device manager 104.

The device manager 104 may be implemented as multiple devices in a facility. Each device manager may include a wireless access point 106 or a similar means of establishing wireless communication. Each device manager may also include processing capability for establishing and modifying the identifier list, and sending the identifier list to multiple mobile devices.

Activating the authenticated mobile device 101 may further comprise receiving the activation signal from the device manager 104, or generating the activation signal on the authenticated mobile device 101 when the authenticated mobile device 101 is in a pre-determined location, the generating optionally comprising determining that the authenticated mobile device 101 is in the predetermined location by means of the location identifier 102 (i.e. a means of location identification or a means of determining the location of the mobile device 101 such as a GNSS receiver) on the authenticated mobile device 101.

The identifier list may be received from the device manager 104, or from a data server such as a web server, wherein the identifier list may be received from the data server in response to a request from the mobile device 101.

Pre-authorization of payment may be performed after authentication of the mobile device 101. In particular, the service provider 108 may determine that sufficient funds exist in an account associated with the user of the mobile device 101 and authorize payment. Confirmation of the authentication of the mobile device 101 may also include confirmation of the pre-authorization.

In some cases, the method may comprise selecting, by a first user, the first set of items. The first user may be associated with the mobile device 101. In particular, the first user may be authenticated by the service provider 108 via the mobile device 101. The method may further comprise identifying individual items in the first set of items, wherein the identification of the individual items may be carried out by the mobile device 101 or an item identification device (e.g. a scanner). Also, the method may comprise determining the first item identifier identifying the first set of items, wherein the first item identifier corresponds to the first set of items and/or the first user. The method may also comprise adding the first item identifier to the identifier list.

In some cases, the identifier list includes a second item identifier identifying a second set of items. Accordingly, the second item identifier may differ from the first item identifier. Alternatively, when the second item identifier is equal to the first item identifier, the method further comprises adjusting the second item identifier so that the second item identifier differs from the first item identifier.

For example, if the first item identifier is a cost, the first item identifier may be 12.37 EURO. If the second item identifier is also 12.37 EURO, then the second item identifier can be adjusted to 12.36 EURO. Similar adjustments such as an upward cost adjustment or an adjustment by more than one cent are also possible. Equivalent adjustments can be made for other item identifiers.

It may be that one or more of the following applies: the activation signal and/or the identifier list is received by means of WiFi, SMS, or Bluetooth; the identification signal and/or the indication of the selection is sent by means of WiFi, SMS, or Bluetooth.

In some cases, the identifier list is received at a group address, such as a broadcast address or a multicast address.

Furthermore, it may be that a plurality of mobile devices are within range of the device manager 104. Accordingly, the method may further comprise associating the identified mobile device 101 with the first item identifier. Optionally, the method may further comprise associating a further mobile device with the second item identifier, wherein the further mobile device has been authenticated with the service provider 108 and identified by the advice manager. The group address may designate one or more mobile devices of the plurality of mobile devices. In some cases, the group address only designates mobile devices that have been identified by the device manager 104 and are associated with an item identifier on the list of item identifiers, and wherein the one or more mobile devices includes the mobile device 101 of the first user and optionally includes the further mobile device.

In addition, the method may further comprise confirming, by the device manager 104, payment authorization for the first set of items by means of the first item identifier and the confirmation of the authentication.

The distance between the authenticated mobile device 101 and the device manager 104 may be greater than the maximum range of NFC. In particular, when sending any signal from the mobile device 101 to the device manager 104 or receiving any signal from the device manager 104 at the mobile device 101, the distance between the authenticated mobile device 101 and the device manager 104 may be greater than the maximum range of NFC. For example, the distance between the authenticated mobile device 101 and the device manager 104 may be more than 6 cm, or more than 5 cm, or more than 4 cm.

Activating the mobile device 101 may comprise activating an application (e.g. a payment application) on the authenticated mobile device 101, and/or identifying the mobile device 101 may comprise determining that the application can be used to pay for the first set of items.

Also, the application may cause the authenticated mobile device 101 to send the identification signal, and the application may cause the identified mobile device 101 to send the indication of the selection of the first identifier.

In some cases, the method may further comprise authorizing payment for the first set of items by means of the mobile device 101, wherein authorizing payment optionally comprises moving the mobile device 101 to a predetermined location, thereby causing an authorization signal to be sent from the mobile device 101 (or more particularly the payment application on the mobile device 101) to the service provider 108. The method may further comprise receiving, by the device manager 104, confirmation of payment execution for the first set of items. The confirmation may be received from the service provider 108. Also, the method may comprise deleting, by the device manager 104, the first item identifier from the identifier list after receiving the confirmation of payment.

According to another aspect, a computer program product may be provided. The computer program product may include computer readable instructions, which, when loaded and executed on a computer system, cause the computer system to perform operations according to the steps described above.

According to yet another aspect, a computer system comprising a mobile device 101 coupled to a device manager 104 is provided. The mobile device 101 may enable payment for items to be made. The mobile device 101 may comprise an authenticator for authenticating with a service provider 108. The mobile device 101 may further comprise an activator for activating an application on the mobile device 101 by means of an activation signal after authentication of the mobile device 101 with a service provider 108. In addition, the mobile device 101 may comprise a responder for responding to the activation signal by sending an identification signal to the device manager 104. Moreover, the mobile device 101 may comprise a receiver for receiving an identifier list after the responder sends the identification signal. The identifier list may include a first item identifier identifying a first set of items. Moreover, the mobile device 101 may comprise a distributor for sending an indication of a selection of the first item identifier to the device manager 104. The device manager 104 may comprise a confirmer for confirming authentication of the mobile device 101, and an identity establisher for identifying the mobile device 101 after confirming authentication of the mobile device 101.

## Claims

1. A computer-implemented method for enabling payment for items using a mobile device (101), the method comprising:
authenticating (201) the mobile device (101) with a service provider (108);
confirming, by a device manager (104), authentication of the mobile device (101);
generating an activation signal on the authenticated mobile device (101) when the authenticated mobile device (101) is in a first predetermined location;
activating (203) the authenticated mobile device (101) by means of the activation signal;
responding to the activation signal by sending an identification signal from the authenticated mobile device (101) to the device manager (104);
identifying, by the device manager (104), the authenticated mobile device (101) using the identification signal;
receiving (209), by the identified mobile device (101), an identifier list, the identifier list including a first item identifier identifying a first set of items, wherein the identifier list is received after the confirmation of the authentication of the mobile device (101) by the device manager (104),
wherein, when a plurality of mobile devices are within range of the device manager (104), the receiving (209) comprises:
associating the identified mobile device (101) with a first item identifier;
designating, via a multicast address, one or more mobile devices of the plurality of mobile devices, wherein the multicast address only designates mobile devices that have been identified by the device manager (104) and are associated with an item identifier on the list of item identifiers, and wherein the one or more mobile devices includes the identified mobile device (101); and
receiving (209) the identifier list at the multicast address;
sending (211), by the identified mobile device (101) to the device manager (104), an indication of a selection of the first item identifier;
authorizing (213) payment for the first set of items by means of the mobile device (101), wherein authorizing payment comprises moving the mobile device (101) to a second predetermined location, thereby causing an authorization signal to be sent from the mobile device (101) to the service provider (108);
receiving, by the device manager (104), confirmation of payment execution for the first set of items; and
deleting (217), by the device manager (104), the first item identifier from the identifier list after receiving the confirmation of payment.

2. The method of claim 1, wherein generating the activation signal further comprises determining that the authenticated mobile device (101) is in the predetermined location by means of a location identifier (102) on the authenticated mobile device (101).

3. The method of claim 1 or 2, wherein the identifier list is received from:
the device manager (104), or
a data server such as a web server, wherein the identifier list is received from the data server in response to a request from the mobile device (101).

4. The method of any one of the preceding claims, further comprising
selecting (205), by a first user, the first set of items;
identifying (207) individual items in the first set of items, wherein the identifying of the individual items is carried out by the mobile device (101) or an item identification device;
determining the first item identifier identifying the first set of items, wherein the first item identifier corresponds to the first set of items and/or the first user; and
adding the first item identifier to the identifier list.

5. The method of any one of the preceding claims,
wherein the identifier list includes a second item identifier identifying a second set of items; and wherein:
the second item identifier differs from the first item identifier; or
when the second item identifier is equal to the first item identifier, the method further comprises adjusting the second item identifier so that the second item identifier differs from the first item identifier.

6. The method of any one of the preceding claims, wherein one or more of the following applies:
the activation signal and/or the identifier list is received by means of WiFi, or SMS;
the identification signal and/or the indication of the selection is sent by means of WiFi, or SMS.

7. The method of claim 1, further comprising:
associating the second item identifier with a further mobile device, wherein the further mobile device has been authenticated with the service provider (108) and identified by the device manager (104);
wherein the one or more mobile devices includes the further mobile device.

8. The method of any one of the preceding claims, further comprising:
confirming, by the device manager (104), payment authorization for the first set of items by means of the first item identifier and the confirmation of the authentication.

9. The method of any one of the preceding claims, wherein the distance between the authenticated mobile device (101) and the device manager (104) is greater than the maximum range of Near Field Communication, NFC.

10. The method of any one of the preceding claims, wherein activating (203) the mobile device (101) comprises activating an application on the authenticated mobile device (101), and/or
wherein identifying the mobile device (101) comprises determining that the application can be used to pay for the first set of items.

11. The method of claim 10, wherein the application causes the authenticated mobile device (101) to send the identification signal, and wherein the application causes the identified mobile device (101) to send the indication of the selection of the first identifier.

12. A computer program product comprising computer-readable instructions, which, when loaded and executed on a computer system, cause the computer system to perform operations according to the method of any one of the preceding claims.

13. A computer system (100) comprising a mobile device (101) coupled to a device manager (104), the mobile device (101) enabling payment for items,
the mobile device (101) comprising:
an authenticator for authenticating with a service provider (108);
an activator for activating an application on the mobile device (101) by generating, after authentication of the mobile device (101) with the service provider (108), the activation signal on the authenticated mobile device (101) when the authenticated mobile device (101) is in a first predetermined location;
a responder for responding to the activation signal by sending an identification signal to the device manager (104);
a receiver for receiving an identifier list after the responder sends the identification signal, the identifier list including a first item identifier identifying a first set of items,
wherein, when a plurality of mobile devices are within range of the device manager (104), the receiving comprises:
associating the identified mobile device (101) with a first item identifier;
designating, via a multicast address, one or more mobile devices of the plurality of mobile devices, wherein the multicast address only designates mobile devices that have been identified by the device manager (104) and are associated with an item identifier on the list of item identifiers, and wherein the one or more mobile devices includes the identified mobile device (101); and
receiving the identifier list at the multicast address;
a distributor for sending an indication of a selection of the first item identifier to the device manager (104);
an authorizer for authorizing payment for the first set of items, wherein authorizing payment comprises moving the mobile device (101) to a second predetermined location, thereby causing an authorization signal to be sent from the mobile device (101) to the service provider (108);
the device manager (104) comprising:
a confirmer for confirming authentication of the mobile device (101);
an identity establisher for identifying the mobile device (101) after confirming authentication of the mobile device (101);
a receiver for receiving confirmation of payment execution for the first set of items; and
a deleter for deleting the first item identifier from the identifier list after receiving the confirmation of payment.

## Patentansprüche

1. Ein computerimplementiertes Verfahren zum Ermöglichen der Bezahlung von Artikeln unter Verwendung eines Mobilgeräts (101), wobei das Verfahren umfasst:
Authentifizieren (201) des Mobilgeräts (101) durch einen Serviceprovider (108);
Bestätigen, durch einen Gerätemanager (104), der Authentifizierung des Mobilgeräts (101);
Erzeugen eines Aktivierungssignals auf dem authentifizierten Mobilgerät (101), wenn das authentifizierte Mobilgerät (101) an einem ersten vorbestimmten Ort ist;
Aktivieren (203) des authentifizierten Mobilgeräts (101) mittels des Aktivierungssignals;
Antworten auf das Aktivierungssignal durch Senden eines Identifizierungssignals von dem authentifizierten Mobilgerät (101) an den Gerätemanager (104);
Identifizieren, durch den Gerätemanager (104), des authentifizierten Mobilgeräts (101) unter Verwendung des Identifizierungssignals;
Empfangen (209), durch das identifizierte Mobilgerät (101), einer Identifiziererliste, wobei die Identifiziererliste einen ersten einen ersten Satz an Artikeln identifizierenden Artikelidentifizierer beinhaltet, wobei die Identifiziererliste empfangen wird, und zwar nach der Bestätigung der Authentifizierung des Mobilgeräts (101) durch den Gerätemanager (104),
wobei, wenn eine Vielzahl von Mobilgeräten in Reichweite des Gerätemanagers (104) ist, das Empfangen umfasst:
Verknüpfen des identifizierten Mobilgeräts (101) mit einem ersten Artikelidentifizierer;
Kennzeichnen, über eine Multicast-Adresse, eines oder mehrerer Mobilgeräte aus der Vielzahl von Mobilgeräten, wobei die Multicast-Adresse nur Mobilgeräte kennzeichnet, welche durch den Gerätemanager (104) identifiziert worden sind und mit einem Artikelidentifizierer auf der Liste von Artikelidentifizierern verknüpft sind, und wobei das eine oder die mehreren Mobilgeräte das identifizierte Mobilgerät (101) einschließen; und
Empfangen (209) der Identifiziererliste an der Multicast-Adresse;
Senden (211), durch das identifizierte Mobilgerät (101) an den Gerätemanager (104), eines Hinweises über eine Auswahl des ersten Artikelidentifizierers;
Authorisieren (213) der Bezahlung für den ersten Satz an Artikeln mittels des Mobilgeräts (101), wobei Authorisieren der Bezahlung umfasst, das Mobilgerät (101) an einen zweiten vorbestimmten Ort zu bewegen, wodurch bewirkt wird, dass ein Authorisierungssignal von dem Mobilgerät (101) an den Serviceprovider (108) gesendet wird;
Erhalten, durch den Gerätemanager (104), der Bestätigung über die Zahlungsdurchführung des ersten Satzes an Artikeln; und
Löschen (217), durch den Gerätemanager (104), des ersten Artikelidentifizierers von der Identifiziererliste nach Erhalt der Zahlungsbestätigung.

2. Das Verfahren nach Anspruch 1, wobei Erzeugen des Aktivierungssignals ferner umfasst zu bestimmen, dass das authentifizierte Mobilgerät (101) an dem vorbestimmten Ort ist, mittels eines Ortsidentifizierers (102) auf dem authentifizierten Mobilgerät (101).

3. Das Verfahren nach Anspruch 1 oder 2, wobei die Identifiziererliste empfangen wird von:
dem Gerätemanager (104) oder
einem Datenserver wie einem Webserver, wobei die Identifiziererliste von dem Datenserver als Antwort auf eine Anfrage von dem Mobilgerät (101) erhalten wird.

4. Das Verfahren nach einem der vorhergehenden Ansprüche umfasst ferner:
Auswählen (205), durch einen ersten Benutzer, des ersten Satzes an Artikeln;
Identifizieren (207) einzelner Artikel in dem ersten Satz an Artikeln, wobei das Identifizieren der einzelnen Artikel durch das Mobilgerät (101) oder ein Artikelidentifizierungsgerät durchgeführt wird;
Bestimmen des ersten den ersten Satz an Artikeln identifizierenden Artikelidentifizierers, wobei der erste Artikelidentifizierer dem ersten Satz an Artikeln und/oder dem ersten Benutzer entspricht; und
Hinzufügen des ersten Artikelidentifizierers zur Identifiziererliste.

5. Das Verfahren nach einem der vorhergehenden Ansprüche,
wobei die Identifiziererliste einen zweiten einen zweiten Satz an Artikeln identifizierenden Artikelidentifizierer enthält; und wobei:
sich der zweite Artikelidentifizierer von dem ersten Artikelidentifizierer unterscheidet; oder
wenn der zweite Artikelidentifizierer gleich dem ersten Artikelidentifizierer ist, das Verfahren ferner umfasst, den zweiten Artikelidentifizierer anzupassen, so dass sich der zweite Artikelidentifizierer von dem ersten Artikelidentifizierer unterscheidet.

6. Das Verfahren nach einem der vorhergehenden Ansprüche, wobei eines oder mehreres des Folgenden Anwendung findet:
das Aktivierungssignal und/oder die Identifiziererliste wird mittels WiFi oder SMS empfangen;
das Identifizierungssignal und/oder der Hinweis über die Auswahl wird mittels WiFi oder SMS gesendet.

7. Das Verfahren nach Anspruch 1 umfasst ferner:
Verknüpfen des zweiten Artikelidentifizierers mit einem weiteren Mobilgerät, wobei das weitere Mobilgerät mit dem Serviceprovider (108) authentifiziert und durch den Gerätemanager (104) identifiziert worden ist;
wobei das eine oder die mehreren Mobilgeräte das weitere Mobilgerät einschließen.

8. Das Verfahren nach einem der vorhergehenden Ansprüche umfasst ferner:
Bestätigen, durch den Gerätemanager (104), der Zahlungsauthorisierung für den ersten Satz an Artikeln mittels des ersten Artikelidentifizierers und die Bestätigung der Authentifizierung.

9. Das Verfahren nach einem der vorhergehenden Ansprüche, wobei die Distanz zwischen dem authentifizierten Mobilgerät (101) und dem Gerätemanager (104) größer als die maximale Reichweite von Nahfeldkommunikation, NFC, ist.

10. Das Verfahren nach einem der vorhergehenden Ansprüche, wobei Aktivieren (203) des Mobilgeräts (101) Aktivieren einer Anwendung auf dem authentifizierten Mobilgerät (101) umfasst und/oder
wobei Identifizieren des Mobilgeräts (101) umfasst zu bestimmen, dass die Anwendung verwendet werden kann, um für den ersten Satz an Artikeln zu bezahlen.

11. Das Verfahren nach Anspruch 10, wobei die Anwendung bewirkt, dass das authentifizierte Mobilgerät (101) das Identifizierungssignal sendet, und wobei die Anwendung bewirkt, dass das identifizierte Mobilgerät (101) den Hinweis über die Auswahl des ersten Identifizierers sendet.

12. Ein Computerprogrammprodukt vom Computer lesbare Anweisungen umfassend, welche, wenn geladen und auf einem Computersystem ausgeführt, bewirken, dass das Computersystem Operationen entsprechend dem Verfahren nach einem der vorhergehenden Ansprüche ausführt.

13. Ein Computersystem (100) ein an einen Gerätemanager (104) gekoppeltes Mobilgerät (101) umfassend, wobei das Mobilgerät (101) Bezahlen für Artikel ermöglicht,
wobei das Mobilgerät (101) umfasst:
einen Authentifikator zum Authentifizieren mit einem Serviceprovider (108);
einen Aktivator zum Aktivieren einer Anwendung auf dem Mobilgerät (101) durch Erzeugen, nach der Authentifizierung des Mobilgeräts (101) mit dem Serviceprovider (108), des Aktivierungssignals auf dem authentifizierten Mobilgerät (101), wenn das authentifizierte Mobilgerät (101) an einem ersten vorbestimmten Ort ist;
einen Antworter zum Antworten auf das Aktivierungssignal durch Senden eines Identifizierungssignals an den Gerätemanager (104);
einen Empfänger zum Empfangen einer Identifiziererliste, nachdem der Antworter das Identifizierungssignal sendet, wobei die Identifiziererliste einen ersten einen ersten Satz an Artikeln identifizierenden Artikelidentifizierer einschließt,
wobei, wenn eine Vielzahl von Mobilgeräten in Reichweite des Gerätemanagers (104) ist, das Empfangen umfasst:
Verknüpfen des identifizierten Mobilgeräts (101) mit einem ersten Artikelidentifizierer;
Kennzeichnen, über eine Multicast-Adresse, eines oder mehrerer Mobilgeräte aus der Vielzahl von Mobilgeräten, wobei die Multicast-Adresse nur Mobilgeräte kennzeichnet, die durch den Gerätemanager (104) identifiziert worden sind und mit einem Artikelidentifizierer auf der Liste von Artikelidentifizierern verknüpft sind, und wobei das eine oder die mehreren Mobilgeräte das identifizierte Mobilgerät (101) einschließen; und
Empfangen der Identifiziererliste an der Multicast-Adresse;
einen Verteiler zum Senden eines Hinweises über eine Auswahl des ersten Artikelidentifizierers an den Gerätemanager (104);
einen Authorisierer zum Authorisieren der Zahlung für den ersten Satz an Artikeln, wobei Authorisieren der Zahlung Bewegen des Mobilgeräts (101) an einen zweiten vorbestimmten Ort umfasst, wodurch bewirkt wird, dass ein Authorisierungssignal von dem Mobilgerät (101) an den Serviceprovider (108) gesendet wird;
der Gerätemanager (104) umfasst:
einen Bestätiger zum Bestätigen der Authentifizierung des Mobilgeräts (101);
einen Identitätshersteller zum Identifizieren des Mobilgeräts (101) nach Bestätigen der Authentifizierung des Mobilgeräts (101);
einen Empfänger zum Empfangen der Bestätigung über Zahlungsdurchführung für den ersten Satz an Artikeln; und
einen Löscher zum Löschen des ersten Artikelidentifizierers von der Identifiziererliste nach Empfangen der Zahlungsbestätigung.

## Revendications

1. Un procédé mis en oeuvre par ordinateur pour permettre le paiement des articles en utilisant un dispositif mobile (101), le procédé comprenant le fait de :
authentifier (201) le dispositif mobile (101) avec un prestataire de services (108) ;
confirmer, par un gestionnaire de dispositif (104), l'authentification du dispositif mobile (101) ;
générer un signal d'activation sur le dispositif mobile (101) authentifié, quand le dispositif mobile (101) authentifié se trouve dans un premier emplacement prédéterminé ;
activer (203) le dispositif mobile (101) authentifié au moyen du signal d'activation ;
répondre au signal d'activation en envoyant un signal d'identification à partir du dispositif mobile (101) authentifié au gestionnaire de dispositif (104) ;
identifier, par un gestionnaire de dispositif (104), le dispositif mobile (101) authentifié en utilisant le signal d'identification ;
recevoir (209), de la part du dispositif mobile (101) identifié, une liste d'identificateurs, la liste d'identificateurs incluant un premier identificateur d'article identifiant un premier ensemble d'articles, sachant que la liste d'identificateurs est reçue après la confirmation de l'authentification du dispositif mobile (101) par le gestionnaire de dispositif (104),
sachant que, quand une pluralité de dispositifs mobiles se trouvent dans la zone de portée du gestionnaire de dispositif (104), le fait de recevoir (209) comprend le fait de :
associer le dispositif mobile (101) à un premier identificateur d'article ;
désigner, via une adresse de multidiffusion, un ou plusieurs dispositifs mobiles parmi la pluralité de dispositifs mobiles, sachant que l'adresse de multidiffusion désigne uniquement des dispositifs mobiles qui ont été identifiés par le gestionnaire de dispositif (104) et qui sont associés à un identificateur d'article sur la liste d'identificateurs d'article, et sachant que le ou les dispositifs mobiles incluent le dispositif mobile (101) identifié ; et
recevoir (209) la liste d'identificateurs auprès de l'adresse de multidiffusion ;
envoyer (211), par le dispositif mobile (101) identifié au gestionnaire de dispositif (104), une indication concernant une sélection du premier identificateur d'article ;
autoriser (213) le paiement du premier ensemble d'articles au moyen du dispositif mobile (101), sachant que le fait d'autoriser le paiement comprend le fait de déplacer le dispositif mobile (101) vers un deuxième emplacement prédéterminé, entraînant ainsi l'envoi d'un signal d'autorisation à partir du dispositif mobile (101) au prestataire de services (108) ;
recevoir, par le gestionnaire de dispositif (104), une confirmation d'exécution des paiements du premier ensemble d'articles ; et
effacer (217), par le gestionnaire de dispositif (104), le premier identificateur d'article de la liste d'identificateurs après avoir reçu la confirmation de paiement.

2. Le procédé d'après la revendication 1, sachant que le fait de générer le signal d'activation comprend en outre le fait de déterminer que le dispositif mobile (101) authentifié se trouve dans l'emplacement prédéterminé, au moyen d'un identificateur d'emplacement (102) dans le dispositif mobile (101) authentifié.

3. Le procédé d'après la revendication 1 ou 2, sachant que la liste d'identificateurs est reçue de la part :
du gestionnaire de dispositif (104), ou
d'un serveur de données tel qu'un serveur web, sachant que la liste d'identificateurs est reçue de la part du serveur de données en réponse à une requête de la part du dispositif mobile (101).

4. Le procédé d'après une des revendications précédentes, comprenant en outre le fait de
sélectionner (205), par un premier utilisateur, le premier ensemble d'articles ;
identifier (207) des articles individuels dans le premier ensemble d'articles, sachant que l'identification des articles individuels est effectuée par le dispositif mobile (101) ou par un dispositif d'identification d'articles. ;
déterminer le premier identificateur d'article identifiant le premier ensemble d'articles, sachant que le premier identificateur d'article correspond au premier ensemble d'articles et/ou au premier utilisateur ; et
ajouter le premier identificateur d'article à la liste d'identificateurs.

5. Le procédé d'après une des revendications précédentes,
sachant que la liste d'identificateurs inclut un deuxième identificateur d'article identifiant un deuxième ensemble d'articles ; et sachant que
le deuxième identificateur d'article diffère du premier identificateur d'article ; ou que
quand le deuxième identificateur d'article est égal au premier identificateur d'article, le procédé comprend en outre le fait d'ajuster le deuxième identificateur d'article de manière que le deuxième identificateur d'article diffère du premier identificateur d'article.

6. Le procédé d'après une des revendications précédentes, sachant que une ou plusieurs des dispositions suivantes s'appliquent :
le signal d'activation et/ou la liste d'identificateurs est reçu au moyen de Wi-Fi ou de SMS ;
le signal d'identification et/ou l'indication de la sélection est envoyé au moyen de Wi-Fi ou de SMS.

7. Le procédé d'après la revendication 1, comprenant en outre le fait de :
associer le deuxième identificateur d'article avec un dispositif mobile supplémentaire, sachant que le dispositif mobile supplémentaire a été authentifié avec le prestataire de services (108) et identifié avec le gestionnaire de dispositif (104) ;
sachant que le ou les dispositifs mobiles incluent le dispositif mobile supplémentaire.

8. Le procédé d'après une des revendications précédentes, comprenant en outre le fait de :
confirmer, par le gestionnaire de dispositif (104), l'autorisation de paiement du premier ensemble d'articles au moyen du premier identificateur d'article et la confirmation de l'authentification.

9. Le procédé d'après une des revendications précédentes, sachant que la distance entre le dispositif mobile (101) authentifié et le gestionnaire de dispositif (104) est supérieure à la portée maximale d'une communication en champ proche, NFC.

10. Le procédé d'après une des revendications précédentes, sachant que le fait d'activer (203) le dispositif mobile (101) comprend le fait d'activer une application dans le dispositif mobile (101) authentifié, et/ou
sachant que le fait d'identifier le dispositif mobile (101) comprend le fait de déterminer, que l'application peut être utilisée pour payer le premier ensemble d'articles.

11. Le procédé d'après la revendication 10, sachant que l'application amène le dispositif mobile (101) authentifié à envoyer le signal d'identification, et sachant que l'application amène le dispositif mobile (101) identifié à envoyer l'indication concernant une sélection du premier identificateur.

12. Un produit programme d'ordinateur comprenant des instructions lisibles par ordinateur, lesquelles, quand elles sont chargées et exécutées dans un système informatique, amènent le système informatique à effectuer des opérations conformément au procédé d'après une des revendications précédentes.

13. Un système informatique (100) comprenant un dispositif mobile (101) couplé à un gestionnaire de dispositif (104), le dispositif mobile (101) permettant le paiement d'articles,
le dispositif mobile (101) comprenant :
un authentificateur pour authentifier avec un prestataire de services (108) ;
un activateur pour activer une application dans le dispositif mobile (101) en générant, après l'authentification du dispositif mobile (101) avec le prestataire de services (108), le signal d'activation sur le dispositif mobile (101) authentifié, quand le dispositif mobile (101) authentifié se trouve dans un premier emplacement prédéterminé ;
un répondeur pour répondre au signal d'activation en envoyant un signal d'identification au gestionnaire de dispositif (104) ;
un récepteur pour recevoir une liste d'identificateurs, après que le répondeur a envoyé le signal d'identification, la liste d'identificateurs incluant un premier identificateur d'article identifiant un premier ensemble d'articles,
sachant que, quand une pluralité de dispositifs mobiles se trouvent à portée du gestionnaire de dispositif (104), le fait de recevoir comprend le fait de :
associer le dispositif mobile (101) identifié à un premier identificateur d'article ;
désigner, via une adresse de multidiffusion, un ou plusieurs dispositifs mobiles parmi la pluralité de dispositifs mobiles, sachant que l'adresse de multidiffusion désigne uniquement des dispositifs mobiles qui ont été identifiés par le gestionnaire de dispositif (104) et qui sont associés à un identificateur d'article sur la liste d'identificateurs d'article, et sachant que le ou les dispositifs mobiles incluent le dispositif mobile (101) identifié ; et
recevoir la liste d'identificateurs auprès de l'adresse de multidiffusion ;
un distributeur pour envoyer une indication concernant une sélection du premier identificateur d'article au gestionnaire de dispositif (104) ;
un autorisateur pour autoriser le paiement du premier ensemble d'articles, sachant que le fait d'autoriser le paiement comprend le fait de déplacer le dispositif mobile (101) vers un deuxième emplacement prédéterminé, entraînant ainsi l'envoi d'un signal d'autorisation à partir du dispositif mobile (101) au prestataire de services (108) ;
le gestionnaire de dispositif (104) comprenant :
un confirmateur pour confirmer l'authentification du dispositif mobile (101) ;
un bâtisseur d'identité pour identifier le dispositif mobile (101) après la confirmation de l'authentification du dispositif mobile (101) ;
un récepteur pour recevoir une confirmation d'exécution des paiements du premier ensemble d'articles ; et
un effaceur pour effacer le premier identificateur d'article de la liste d'identificateurs après avoir reçu la confirmation de paiement.
